## Europäisches Patentamt

## European Patent Office

## Office européen des brevets

(19)

(11) Numéro de publication: **0 258 106**
**B1**

(12)

# FASCICULE DE BREVET EUROPEEN

(45) Date de publication du fascicule du brevet:
05.09.90

(51) Int. Cl.⁵: **G01F 23/00**, B60K 15/06,
F16L 37/10

(21) Numéro de dépôt: **87401783.3**

(22) Date de dépôt: **30.07.87**

(54) **Dispositif pour assurer la fixation étanche d'une sonde de jauge dans les puits de jauge du réservoir de carburant d'un véhicule automobile.**

(30) Priorité: **08.08.86 FR 8611779**

(43) Date de publication de la demande:
**02.03.88 Bulletin 88/9**

(45) Mention de la délivrance du brevet:
**05.09.90 Bulletin 90/36**

(84) Etats contractants désignés:
**DE ES GB IT**

(56) Documents cités:
**FR-A- 1 294 601**
**FR-A- 1 429 669**
**FR-A- 2 262 609**
**US-A- 3 470 907**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Micoureau, Francis, 1, impasse des Bouleaux, F-91070 Bondoufle(FR)**

(74) Mandataire: **Boivin, Claude, 9, rue Edouard-Charton, F-78000 Versailles(FR)**

## Description

Les sondes de jauge d'un carburant d'un véhicule automobile sont fixées dans un puits de jauge réalisé dans la partie supérieure du réservoir de carburant.

Ce puits comporte une ouverture centrale circulaire et la sonde est munie d'une collerette dont le diamètre est supérieur à celui de cette ouverture et qui vient prendre appui sur le fond du puits de jauge avec interposition d'un joint d'étanchéité annulaire. La fixation de la sonde de jauge est généralement assurée par une bague filetée que l'on visse dans une partie taraudée du puits de jauge et qui vient serrer la collerette et le joint d'étanchéité contre le fond de ce puits.

Mais les réservoirs de carburant sont le plus couramment en matière plastique par exemple en polyéthylène. Cette matière se déforme dans le temps en présence du carburant, sous l'effet des variations de température. Cette déformation entraîne une perte d'étanchéité.

Pour éviter cet inconvénient on a décidé d'incorporer dans la paroi du puits de jauge, lors du moulage du réservoir, un insert métallique qui évite ultérieurement toute déformation parasite. Mais l'adjonction de cet insert est coûteuse. On a également proposé d'incorporer dans l'assemblage un mastic ou un produit souple analogue; mais cette solution est peu efficace.

La présente invention concerne un dispositif pour assurer la fixation étanche d'une sonde de jauge dans le puits de jauge du réservoir de carburant, en matière plastique, d'un véhicule automobile comprenant un puits de jauge, ladite sonde présentant une collerette s'appuyant sur le fond du puits de jauge avec interposition d'un joint d'étanchéité annulaire, la paroi interne du puits de jauge présentant au moins deux bossages, et une rondelle élastique étant interposée entre la collerette de la sonde de jauge et les bossages, qui évite ces divers inconvénients.

Le document FR-A 1 294 601 décrit un dispositif de fixation d'une sonde de jauge comprenant un anneau qui se fixe dans le puits de jauge par un montage à baïonnette et qui vient serrer la collerette de la sonde contre le joint d'étanchéité, cet anneau présentant des doigts élastiques qui coopèrent avec des dents de rochet prévues sur la face supérieure de la collerette de façon à empêcher l'anneau de tourner par rapport à la sonde. Mais, en cas de forte dilatation du réservoir, l'élasticité du joint n'est pas suffisante pour assurer l'étanchéité, car l'anneau ne pivote pas tout seul pour comprimer davantage le joint.

Le document US-A 3 470 907 décrit un dispositif analogue dans lequel la collerette de la sonde est maintenue par un anneau élastique fendu engagé dans une rainure de la paroi du puits de jauge; mais là encore l'étanchéité n'est pas maintenue en cas de forte dilatation du réservoir.

Ce dispositif de fixation est caractérisé en ce que la rondelle présente au moins deux bras lamellaires en saillie au repos par rapport au plan général de la rondelle et propres à prendre appui contre les bossages, de sorte que l'élasticité des bras pallient l'affaissement éventuel du fond du puits de jauge. Pour assurer la fixation de la sonde dans le puits de jauge, on dispose dans ce puits successivement le joint d'étanchéité, la sonde et la rondelle. Puis on fait pivoter cette rondelle de façon que les bossages compriment les bras lamellaires et que la rondelle plaque ainsi la collerette de la sonde et le joint d'étanchéité contre le fond du puits de jauge.

Les bras lamellaires rattrapent le jeu et assurent l'étanchéité du puits de jauge, même en cas de variations dimensionnelles du réservoir.

La rondelle élastique peut comporter des échancrures périphériques en nombre égal à celui des bossages et ayant même disposition angulaire que ceux-ci. Ces décrochements permettent à la rondelle de descendre dans le puits de jauge sans être gênée par les bossages.

On a décrit ci-après, à titre d'exemple non limitatif, un mode de réalisation du dispositif de fixation selon l'invention avec référence aux dessins annexés dans lesquels :

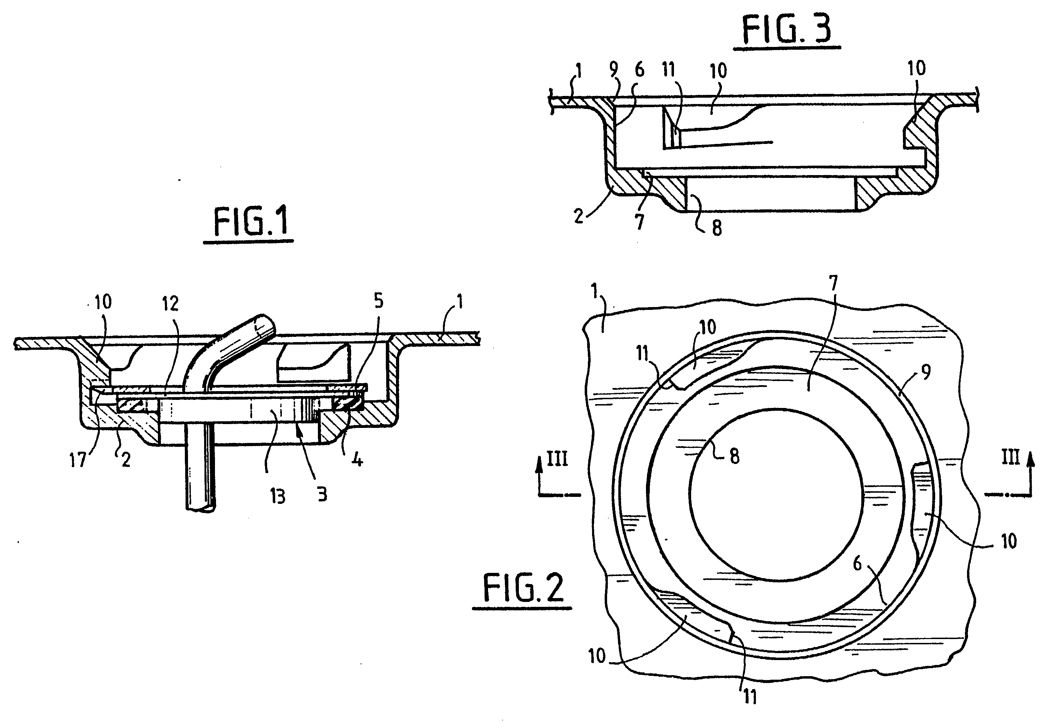

La Figure 1 est une vue en coupe axiale montrant une sonde fixée selon l'invention dans un puits de jauge;

La Figure 2 est une vue en plan du puits de jauge;

La Figure 3 en est une coupe axiale suivant III–III de la Figure 2;

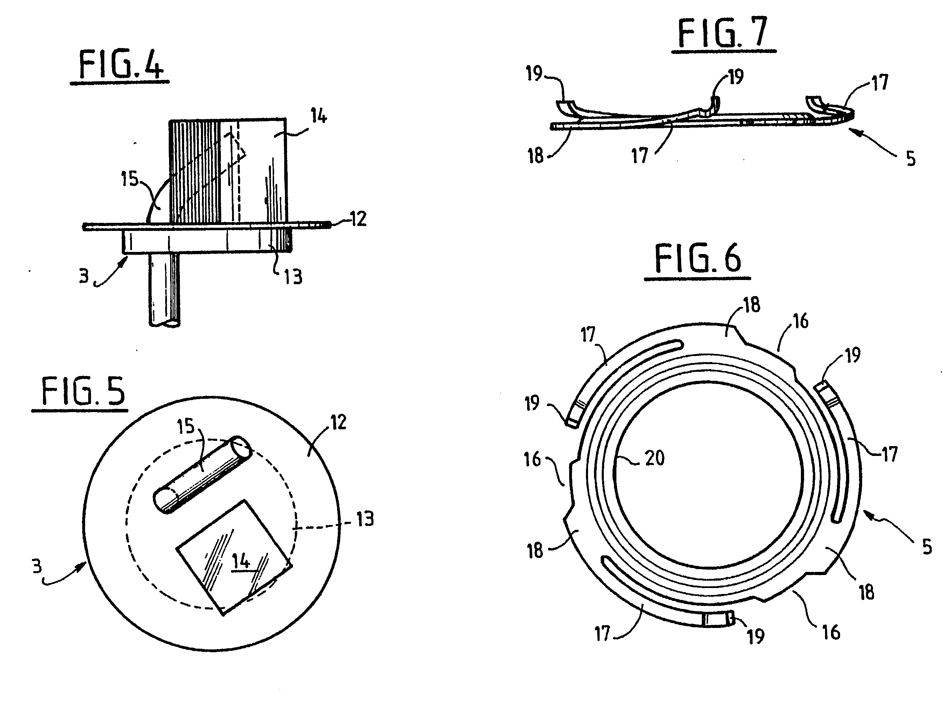

La Figure 4 est une vue en élévation de la sonde;

La Figure 5 en est une vue en plan;

La Figure 6 est une vue en plan de la rondelle élastique;

La Figure 7 en est une vue en élévation.

Au dessin, on voit en 1 un réservoir de carburant de véhicule automobile. Ce réservoir, qui est en matière plastique, comporte dans sa partie supérieure un puits de jauge 2 dans lequel est montée une jauge électrique 3 prenant appui sur un joint élastique 4 et maintenue de façon étanche grâce à une rondelle élastique 5.

Le puits de jauge 2 est réalisé à partir d'un bossage dans lequel est réalisé un alésage borgne 6; dans le fond de cet alésage 6 est réalisé un lamage 7 de faible épaisseur, d'un diamètre plus faible que celui de l'alésage; le lamage 7 est lui-même percé par un alésage 8 de diamètre inférieur à celui de lamage 7. L'alésage 6 possède à sa partie supérieure un chanfrein 9 et sa paroi interne présente trois bossages 10 à 120° l'un de l'autre; les bossages 10 possèdent un chanfrein 11.

La jauge électrique 3 de type connu comporte notamment une collerette d'appui 12 séparant la partie cylindrique inférieure 13 d'une tête carrée 14 située sur la partie supérieure. Un tuyau 15 plonge dans le réservoir. Le joint 4 est constitué d'une rondelle en matière élastique (caoutchouc ou élastomère).

L'anneau élastique 5 est constitué par un anneau métallique de faible épaisseur réalisé dans un acier à ressort et présentant une forme approximativement circulaire avec un diamètre moyen légèrement inférieur au diamètre interne du puits de jauge, il possède trois échancrures périphériques 16 qui lui permettent de descendre entre les trois bossages 10 du puits de jauge. Il comporte en outre trois bras lamellaires 17 en arc de cercle situés à 120° l'un de l'autre se raccordant à l'anneau central par un épaulement 18. Chaque bras 17 se termine par un crochet 19 et fait saillie par rapport au plan général de l'anneau 5; ce dernier possède en son centre un alésage 20.

Le montage est le suivant : on dispose dans le lamage 7 du puits de jauge 2, le joint d'étanchéité 4 puis on enfile la jauge électrique 3 qui prend appui sur le joint d'étanchéité 4 par sa collerette 12. On place alors l'anneau élastique dans le puits de jauge 2 en le faisant descendre entre les bossages 10 qui passent dans les échancrures 16; puis on fait pivoter l'anneau élastique d'environ un quart de tour. Les trois bras lamellaires 17 se compriment et passent sous les trois bossages 10. Les trois crochets 19 en bout des bras lamellaires 17 viennent mettre ceux-ci en butée contre les bossages 10. Les bras 17 pressent alors la collerette 12 du corps de jauge contre le joint d'étanchéité 4 reposant sur le fond du puits de jauge et assurant l'étanchéité même si la matière plastique dans laquelle est réalisé le réservoir se dilate.

On voit de la description qui précède que le dispositif de fixation selon l'invention permet un montage rapide de la sonde de jauge; il suffit de faire tourner l'anneau élastique d'un quart de tour, ce qui ne nécessite pas l'utilisation d'une clef dynanométrique. Il est très simple et permet de maintenir l'étanchéité sous plusieurs centaines de millibars, même après un vieillissement prolongé du réservoir, l'élasticité des bras 17 palliant l'affaissement du fond du puits de jauge 2.

Son prix de revient est pratiquement identique à celui de la solution connue jusqu'à présent, mais il assure une bien meilleure étanchéité.

## Revendications

1. Dispositif pour assurer la fixation étanche d'une sonde de jauge (3) dans un réservoir de carburant, en matière plastique, d'un véhicule automobile, comprenant un puits de jauge (2), ladite sonde munie d'une collerette (12) s'appuyant sur le fond du puits de jauge avec interposition d'un joint d'étanchéité annulaire (4), la paroi interne dudit puits de jauge présentant au moins deux bossages (10), et une rondelle élastique (5) étant interposée entre la collerette (12) de la sonde de jauge et les bossages, caractérisé en ce que la rondelle présente au moins deux bras lamellaires (17) en saillie au repos par rapport au plan général de la rondelle et propres à prendre appui contre les bossages (10), de sorte que l'élasticité des bras (17) paillient l'affaissement du fond du puits de jauge.

2. Dispositif selon la revendication 1, caractérisé en ce que la rondelle (4) comporte des échancrures périphériques (16) en nombre égal à celui des bossages (10) et ayant la même disposition angulaire que ceux-ci.

## Patentansprüche

1. Vorrichtung zur dichten Befestigung einer Meßsonde (3) in einem Kraftstofftank aus Kunststoff eines Kraftfahrzeuges, welcher einen Meßschacht (2) enthält, wobei diese Sonde mit einem Kragen (12) versehen ist, der sich am Boden des Meßschachtes unter Zwischenlegung einer ringförmigen Dichtung (4) abstützt, wobei die Innenwand des Meßschachtes (2) wenigstens zwei Vorsprünge (10) aufweist und eine elastische Scheibe (5) zwischen dem Kragen (12) der Meßsonde und den Vorsprüngen eingesetzt ist, dadurch gekennzeichnet, daß die Scheibe wenigstens zwei lamellenförmige Arme (17) aufweist, die im Ruhestand gegenüber der Hauptebene der Scheibe vorspringen und dafür geeignet sind, an die Vorsprünge (10) angedrückt zu werden dergestalt, daß die Elastizität der Arme (17) das Niederdrücken des Bodens des Meßschachtes erleichtert.

2. Vorrichtung nach Anspruch 1, dadurch gekennzeichnet, daß die Scheibe (5) bogenförmige Aussparungen (16) in derselben Anzahl wie die Vorsprünge (10) und in derselben Winkelanordnung wie diese aufweist.

## Claims

1. Device for tight mounting of a gauging prove (3) in a fuel tank, made from a plastic material, of an automotive vehicle, comprising a gauging well (2), said probe having a collar (12) bearing on the bottom of the gauging well with interpositioning of an annular seal (4), the internal wall of said gauging well having at least two bosses (10), and a resilient washer (5) being interposed between the collar (12) of the gauging well and the bosses, characterized in that the washer has at least two blade arms (17) projecting at rest with respect to the general plane of the washer and adapted to bear against the bosses (10), so that the resilience of the arms (17) palliates the collapse of the bottom of the gauging well.

2. Device according to claim 1, characterized in that the washer (4) comprises peripheral indentations (16) in number equal to that of the bosses (10) and having the same angular arrangement as the latter.

# FIG. 3

1 9 6 11 10 10

2 7 8

# FIG.1

10 12 5 1

17 2 4

13 3

# FIG.2

1 7

10 11 10 9

III III

8

10 10

6

10

11

EP 0 258 106 B1

FIG.4

14

15

12

3

13

FIG.7

19    19    17

18    17    5

FIG.5

15

12

13

3    14

FIG.6

18    16

17

19

19

17

16

20

16    18

18    5

18

17    19    16

EP 0 258 106 B1